# EUROPÄISCHE PATENTANMELDUNG

(11) **EP 0 805 366 A1**
(43) Veröffentlichungstag der Anmeldung: **05.11.1997**
(21) Anmeldenummer: 97105757.5
(22) Anmeldetag: 08.04.1997
(51) Int. Cl.: G02B 6/38

(54) **Steckverbindung**

(30) Priorität: 02.05.1996 DE 29607793 U; 14.05.1996 DE 19619374
(71) Anmelder: Harting KGaA, 32325 Espelkamp (DE)
(72) Erfinder: Harting, Dietmar Dipl.-Kaufm., 32339 Espelkamp (DE); de Vanssay, Jean-Merri, Dipl.-Ing., 75004 Paris (DE); Bernat, Jean-François, 78500 Sartrouville (FR)

(57) **Zusammenfassung**

Für eine Steckverbindung, vorzugsweise eine Steckverbindung für Lichtwellenleiter, die gemeinsam mit elektrischen Steckverbindungen auf einer in ein Gestell einschiebbaren Leiterplatte (3) angeordnet ist, wird vorgeschlagen, die durch die elektrischen Steckverbindungen vorgegebenen Toleranzen in Steckrichtung dadurch auszugleichen, daß die in dem Gestell angeordnete Steckverbindungshälfte (4) für Lichtwellenleiter ein in einem Trägerkörper (6) gehaltenes und verrastetes Steckteil (8) aufweist, und daß beim Zusammenfügen der Steckverbindungshälften (1,4) diese Verrastung gelöst wird und eine Verrastung mit der Steckverbindungshälfte (1) der Leiterplatte erfolgt, wobei durch die gelöste Verrastung mit dem Trägerkörper (8) das Steckteil (8) darin verschiebbar gehalten ist.

## Beschreibung

Die Erfindung betrifft eine Steckverbindung, vorzugsweise eine Steckverbindung für Lichtwellenleiter, bestehend aus zwei Steckverbindungshälften, die beim Zusammenfügen miteinander verrasten, in denen jeweils mindestens ein Steck- bzw. Kontaktteil gehalten ist, und wobei die Stirnseiten der Steck- bzw. Kontaktteile beim Zusammenfügen der Steckverbindungshälften federnd gegeneinandergedrückt werden.

Derartige Steckverbindungen dienen z. B. der Kopplung von Lichtwellenleitern in sogenannten Rückwandsystemen, wobei eine Rückwand eines Gestells zur Aufnahme von Leiterplatten als Leiterplatte ausgebildet ist und mit Lichtwellenleiter-Steckverbindungshälften versehen ist, die mit entsprechenden komplementären Steckverbindungshälften, die auf in das Gestell einschiebbaren Leiterplatten vorgesehen sind, zusammenfügbar sind. Dabei sollen die einschiebbaren Leiterplatten neben Lichtwellenleiter - Steckverbindungshälften auch an sich bekannte, genormte Steckverbindungen zur Übertragung elektrischer Signale aufweisen.
Ggf. kann auch vorgesehen sein, daß die in dem Geste vorgesehen Steckverbindungshälften nicht auf einer Leiterplatte angeordnet, sondern an der Rahmenkonstruktion des Gestells befestigt sind.

Bei einer derartigen Einrichtung ist es erforderlich, daß die Stecktoleranzen in Steckrichtung, die durch den Einsatz von verschiedenen genormten elektrischen Steckverbindern vorgegeben sind, auch bei der Lichtwellenleiter-Steckverbindung ausgeglichen werden, so daß die Enden der Lichtwellenleiter stets dicht aufeinanderliegen. Dabei soll bei gesteckter Lichtwellenleiter-Steckverbindung möglichst keine Kraft auf die Rückwandleiterplatte von dieser ausgeübt werden.

Der Erfindung liegt somit die Aufgabe zugrunde, eine Steckverbindung der eingangs genannten Art dahingehend auszubilden, daß durch elektrische Steckverbindungen verschiedenster genormter Arten (wie z. B. IEC 1076-4-100 oder IEC 1076-4-101) vorgegebene Toleranzen in Steckrichtung, d. h. die für die elektrischen Steckverbindungen an sich zulässigen unterschiedlichen Einschiebetiefen der Steckverbindungen, durch die Steckverbindung derart ausgeglichen werden, daß die Stirnflächen der Steckenden der Lichtwellenleiter bzw. der Stirndruckkontakte stets mit gleichbleibendem Druck gegeneinander gedrückt werden, und daß von der Steckverbindung keine Kräfte auf die Rückwandleiterplatte ausgeübt werden.

Diese Aufgabe wird dadurch gelöst, daß die erste Steckverbindungshälfte einen Trägerkörper aufweist, in den ein Steckteil eingeschoben und zunächst verrastet ist, wobei in dem Steckteil das Steckende eines Lichtwellenleiters bzw. eines Stirndruckkontaktes gegen die Kraft einer Feder längsbeweglich gehalten ist, daß die zweite Steckverbindungshälfte das Steckende eines Lichtwellenleiters bzw. eines Stirndruckkontaktes beinhaltet, daß an der zweiten Steckverbindungshälfte Rastmittel zur Verrastung mit dem Steckteil der ersten Steckverbindungshälfte vorgesehen sind, daß beim Zusammenfügen der Steckverbindungshälften die Verrastung zwischen dem Steckteil und dem Trägerkörper gelöst wird, daß vor dem Lösen dieser Verrastung eine Verrastung des Steckteils mit der zweiten Steckverbindungshälfte erfolgt, wobei dann das Steckteil in dem Trägerkörper längsverschiebbar gehalten ist, und daß beim Trennen der Steckverbindungshälften zunächst wieder eine Verrastung des Steckteils mit dem Trägerkörper erfolgt und anschließend die Verrastung zwischen dem Steckteil und der zweiten Steckverbindungshälfte gelöst wird.

Vorteilhafte Ausgestaltungen der Erfindung sind in den Ansprüchen 2 bis 6 angegeben.

Die mit der Erfindung erzielten Vorteile bestehen insbesondere darin, daß durch die erfindungsgemäße Steckverbindung sehr große Stecktoleranzen in Steckrichtung ausgeglichen werden und daß bereits durch die Verwendung eines einzigen Federarms am Steckteil und eines Rastarms am Halteteil für die verschiedenen Rast- und Halterungsfunktionen die Steckverbindung äußerst klein ausgebildet werden kann. Diese Miniaturisierung des Systems wird dadurch erzielt, daß die verschiedenen Betätigungsschrägen nebeneinander und voneinander unabhängig wirken. Dadurch wird für die Anordnung der Schrägen wenig Platz in Bezug auf die Länge der Steckverbindungshälften benötigt und ein relativ großer Spielraum ist für die freie Bewegung des mit dem Halteteil verrasteten Steckteil innerhalb des Trägerkörpers vorhanden.
Auch wenn ggf. nur ein einziger Federarm vorgesehen ist, ist die Verrastung bereits äußerst sicher, da der in Bezug auf seine Mittelachse symmetrische Federarm alle Rastanschläge und Betätigungsschrägen doppelt aufweist. Darüber hinaus ist die Steckverbindung äußerst kostengünstig herstellbar, da die verschiedenen Teile mit ihren Schrägen und Anschlägen durch einfache, konventionelle Spritzgießverfahren hergestellt werden können.
Ein weiterer Vorteil liegt darin, daß der der Verrastung dienende Federarm im gesteckten und nicht gesteckten Zustand der Steckverbindung stets unbelastet, d. h. nicht ausgelenkt ist. Dadurch sind Ermüdungserscheinungen durch Alterung des Materials von vornherein ausgeschlossen.

Ein Ausführungsbeispiel der Erfindung ist in der Zeichnung dargestellt und wird im folgenden näher beschrieben. Es zeigen
- Fig. 1: eine Steckverbindung für Lichtwellenleiter in perspektivischer Ansicht und auseinandergezogen,
- Fig. 2: die Ansicht der Steckverbindung vor dem Zusammenfügen,
- Fig. 3-1 bis 3-6: Ansichten der Rast- und Verriegelungselemente der Steckverbindung in verschiedenen Stadien des Zusammenfügens,
- Fig. 4-1 bis 4-5: Ansichten der Rast und Verriegelungselemente der Steckverbindung in verschiedenen Stadien des Trennens,
- Fig. 5: die vergrößerte Ansicht des Rastarms der zweiten Steckverbindungshälfte,
- Fig. 6-1, 6-2: vergrößerte Ansichten eines Ausschnitts der oberen Wand des Trägerkörpers,
- Fig. 7-1, 7-2: vergrößerte Ansichten des Federarms des Trägerkörpers,
- Fig. 8: die vergrößerte Ansicht des Zusammenwirkens von Rast- und Federarm
- Fig. 9: die Aufsicht auf die Darstellung der Fig. 8,
- Fig. 10-1, 10-2: vergrößerte Ansichten eines modifizierten Federarms,
- Fig. 11: eine Ansicht der Rast- und Verriegelungselemente beim Zusammenfügen der Steckverbindung mit dem modifizierten Federarm, und
- Fig. 12: eine Ansicht der Rast- und Verriegelungselemente beim Trennen der Steckverbindung mit dem modifizierten Federarm.

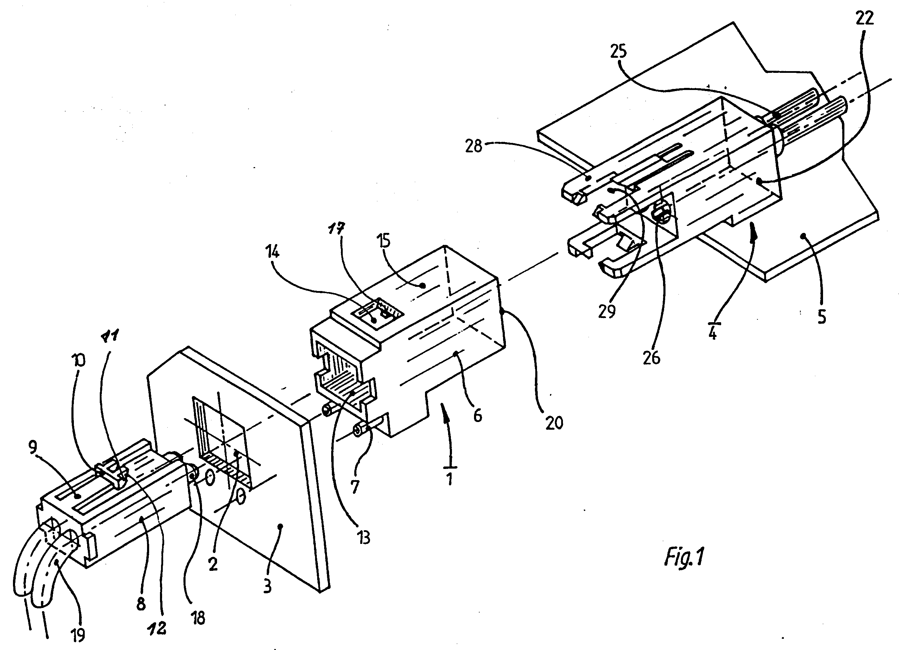

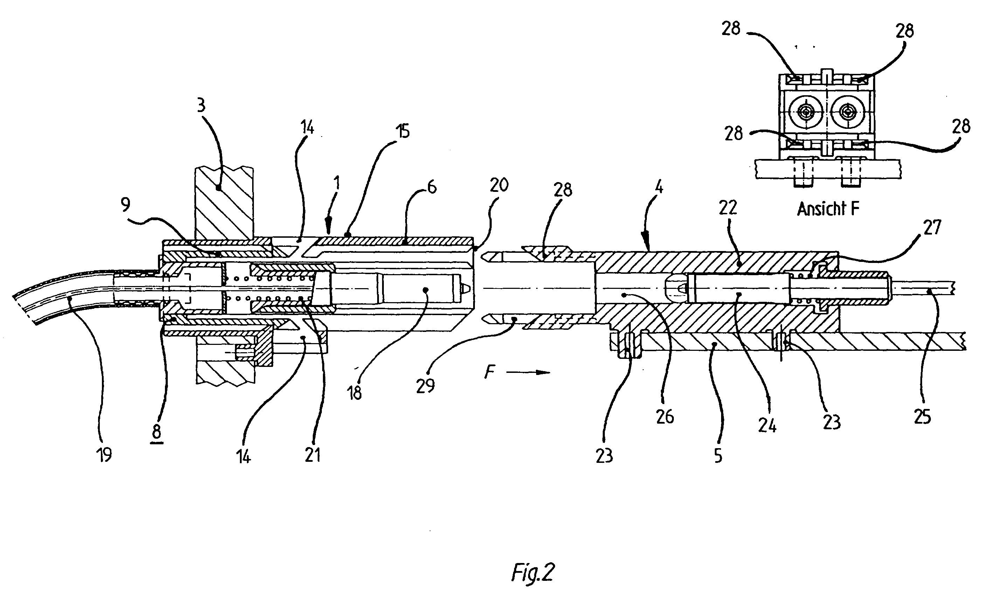

Die in den Fig. 1 und 2 dargestellte Steckverbindung für Lichtwellenleiter besteht im wesentlichen aus zwei rechteckförmigen Steckverbindungshälften, die jeweils auf Leiterplatten befestigt sind. Dabei ist eine erste Steckverbindungshälfte 1 über einem Ausschnitt 2 einer ersten Leiterplatte 3, die die Rückwand eines hier nicht näher dargestellten Einschubgestells zum Einschieben, Halten und elektrischen Kontaktieren von Leiterplatten bildet, montiert. Die andere, zweite Steckverbindungshälfte 4 ist im Randbereich einer zweiten Leiterplatte 5 angeordnet. Diese zweite Leiterplatte ist zum Einschieben in das Gestell ausgebildet, wobei dann die beiden Steckverbindungshälften ineinandergesteckt werden.

Die erste Steckverbindungshälfte besteht aus einem Trägerkörper 6, der mittels Zapfen 7 an der ersten Leiterplatte 3 vor dem Ausschnitt 2 befestigt ist. Ein Steckteil 8 ist von der Rückseite der Leiterplatte her in den Trägerkörper eingeschoben. Das Steckteil weist zwei längliche, sich in Einschieberichtung erstreckende, einstückig angeformte Federarme 9 auf. Das vordere Ende der Federarme ist mit Schrägen und Rastschultern versehen, deren Wirkungsweise weiter unten näher erläutert wird.
Dabei ist das vordere Ende etwa T-förmig gestaltet, wobei die hinteren Schultern 10 als Rastschultern vorgesehen sind. An der Mitte des Querbalkens des T's ist eine nach oben hin weisende Schräge 11 eingeformt, und die dadurch gebildeten Seitenteile des T's sind an der Vorderseite mit nach unten weisenden Schrägen 12 versehen.
Der Trägerkörper 6 weist einen dem Steckteil 8 angepaßten Aufnahmehohlraum 13 auf, in den das Steckteil eingeschoben ist. Beim Einschieben werden die Federarme 9 zunächst nach innen gedrückt, und ihr vorderes Ende federt schließlich in eine rechteckige Öffnung 14 in der oberen bzw. unteren Wand 15 des Trägerkörpers. Dabei verhindern die rechtwinkligen als Anschläge wirkenden Schultern 10 am Federarm, die hinter die als Anschlagschulter 16 wirkende innere Wand der Öffnung 14 gelangen, daß das Steckteil aus dem Trägerkörper herausgezogen werden kann.
Auf der dieser Rastschulter gegenüberliegenden Seite ist die Öffnung 14 mit einer nach oben weisenden Schräge 17 versehen, die beim Trennen der Steckverbindung wirksam wird. Auf der Innenseite der Wand 15 ist weiterhin noch eine sich nach vorn erstreckende Nut 40 eingeformt, in der die Nase 35 des Rastarms des Halteteils der zweiten Steckverbindungshälfte gleitet.

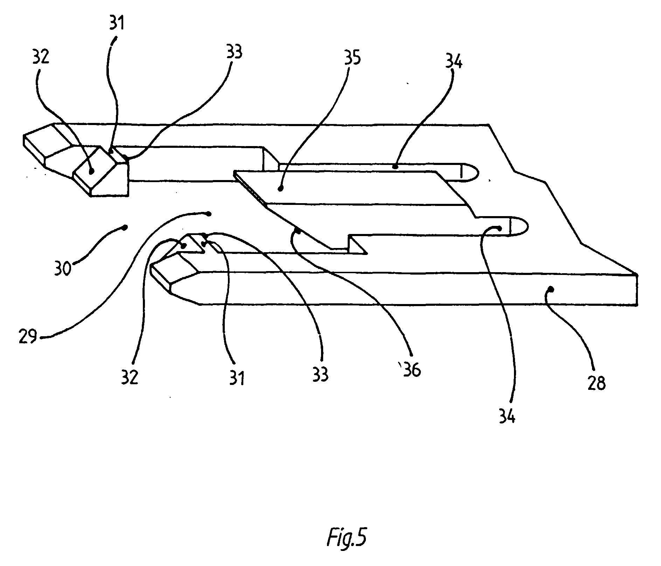

In dem Steckteil sind zwei mit Steckenden 18 versehene Lichtwellenleiter 19 angeordnet, wobei die optische Vorderfläche der Steckenden zur Steckseite 20 der ersten Steckverbindungshälfte weist. Ggf. können aber auch nur ein oder auch mehrere Steckenden bzw. Lichtwellenleiter vorgesehen sein. Die Steckenden sind in dem Steckteil längsverschiebbar gehalten und werden durch die Kraft einer Feder 21 gegen einen inneren Anschlag nach vorn zur Steckseite gedrückt.
Die zweite Steckverbindungshälfte 4 besteht aus einem Halteteil 22, das mittels Zapfen 23 an der zweiten Leiterplatte 5 befestigt ist. In diesem Halteteil sind ebenfalls mit Steckenden 24 versehene Lichtwellenleiter 25 angeordnet, wobei die optische Vorderfläche der Steckenden in einer rohrförmigen Öffnung 26 endet.
Es sei an dieser Stelle angeführt, daß die Öffnung 26 so bemessen ist, daß das Steckende 18 der ersten Steckverbindungshälfte 1 präzise geführt darin eingeschoben werden kann, wenn die beiden Steckverbindungshälften zusammengefügt werden.
Das Steckende des Lichtwellenleiters ist in dem Halteteil längsverschiebbar gehalten, wobei eine Feder 27 dieses stets in eine vordere Position drückt. Das Halteteil weist weiterhin einen oberen und einen unteren in Steckrichtung vorspringenden, flachen, einstückig angeformten Rastarm 28 auf, der in der Fig. 5 vergrößert dargestellt ist. Die Rastarme sind an ihren vorderen Enden mit einer nach vorn hin offenen Ausnehmung 29 versehen, wobei diese Öffnung 30 zur Vorderseite schmaler ist als die Breite der Ausnehmung an sich, so daß Vorsprünge 31 ausgebildet sind.
Diese Vorsprünge sind zur Vorderseite hin abgeschrägt, so daß hier Schrägen 32 ausgebildet sind. Die hinteren, in die Ausnehmung 29 weisenden Flächen der Vorsprünge verlaufen rechtwinklig zur Oberseite des Rastarms und bilden Anschläge 33. Auf der gegenüberliegenden Seite der Ausnehmung 29 ist eine in die Ausnehmung ragende Nase 35 am Rastarm ausgebildet, die nach unten hin abgeschrägt ist, so daß hier eine Schräge 36 vorhanden ist. Zu beiden Seiten der Nase sind Schlitze 34 eingeformt. Die Breite der Schlitze ist dabei so bemessen, daß die leistenförmigen Erhebungen 41 an der unteren Seite der Schräge 17 darin Platz finden können.

In den Fig. 1 und 2 ist die Steckverbindung mit jeweils zwei Federarmen und damit entsprechend zusammenwirkenden Rastarmen dargestellt. Es kann jedoch ggf. auch vorgesehen sein, daß die Steckverbindung nur mit einem Federarm und einem Rastarm versehen ist.

Das grundsätzliche Prinzip der Steckverbindung besteht darin, daß das Steckteil 8 zunächst mit dem Trägerkörper 6 der ersten Steckverbindungshälfte 1 verrastet ist und daß beim Zusammenfügen der Steckverbindungshälften 1, 4 diese Verrastung gelöst und das Steckteil 8 mit der zweiten Steckverbindungshälfte 4 verrastet wird. Dabei ist dann das Steckteil 8 in dem Trägerkörper 6 verschiebbar und wird von diesem lediglich noch geführt. Beim Trennen der Steckverbindungshälften wird zunächst wieder eine Verrastung des Steckteils 8 mit dem Trägerkörper 6 der Steckverbindungshälfte 1 herbeigeführt und anschließend die Verrastung zwischen der Steckverbindungshälfte 4 und dem Steckteil 8 gelöst.

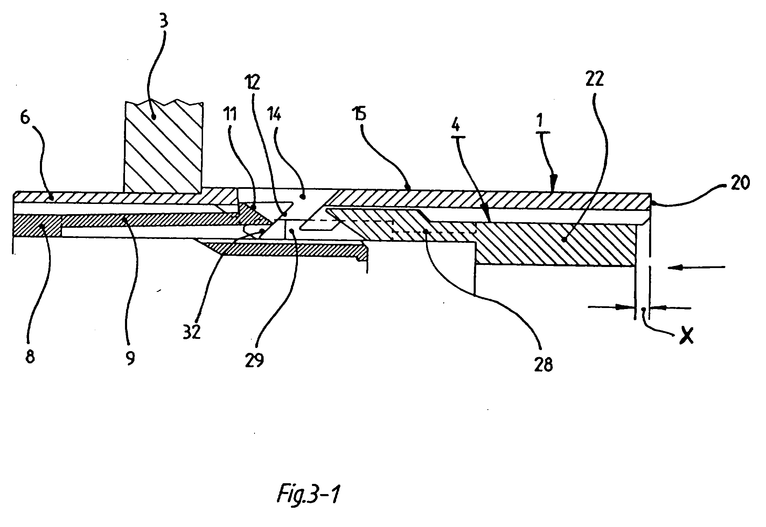

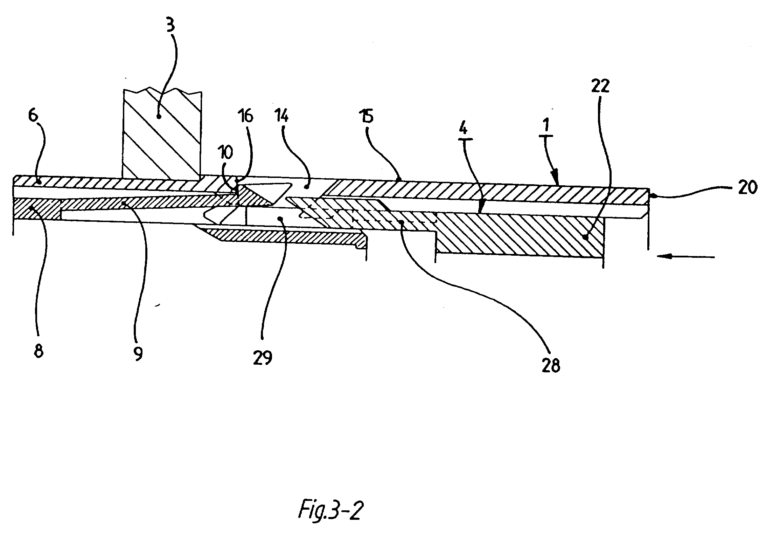

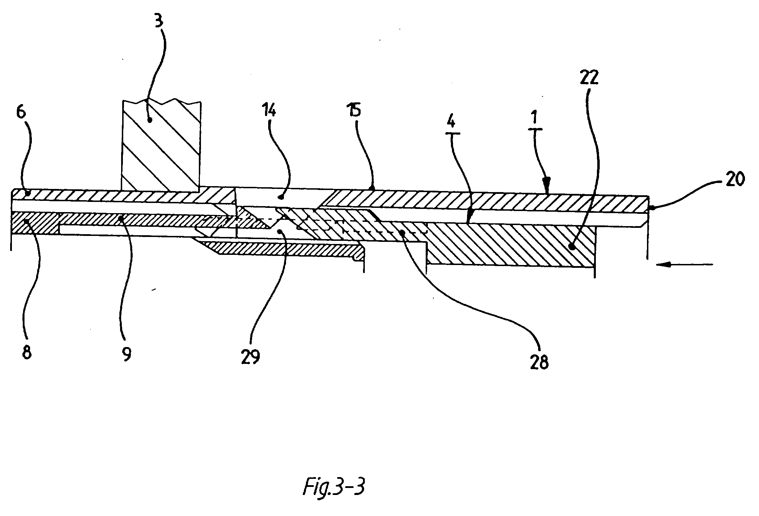

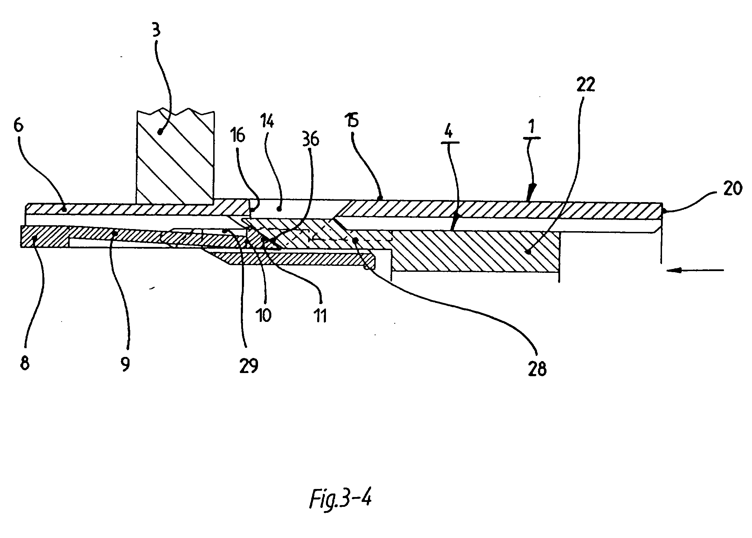

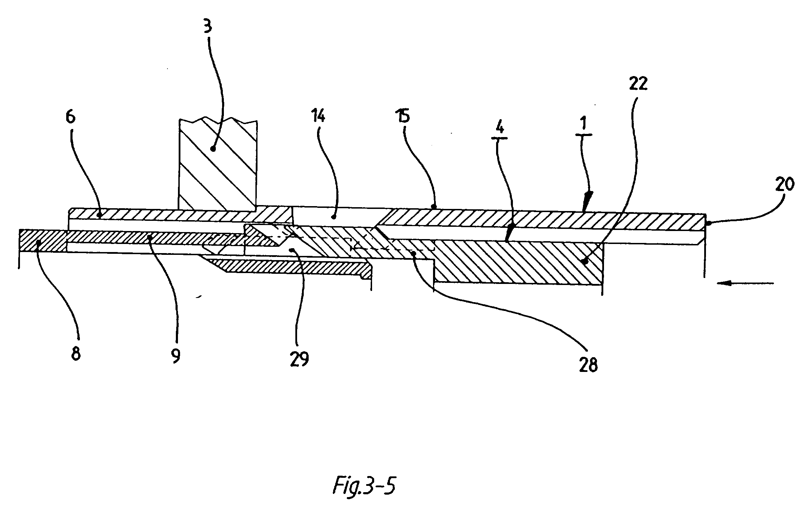

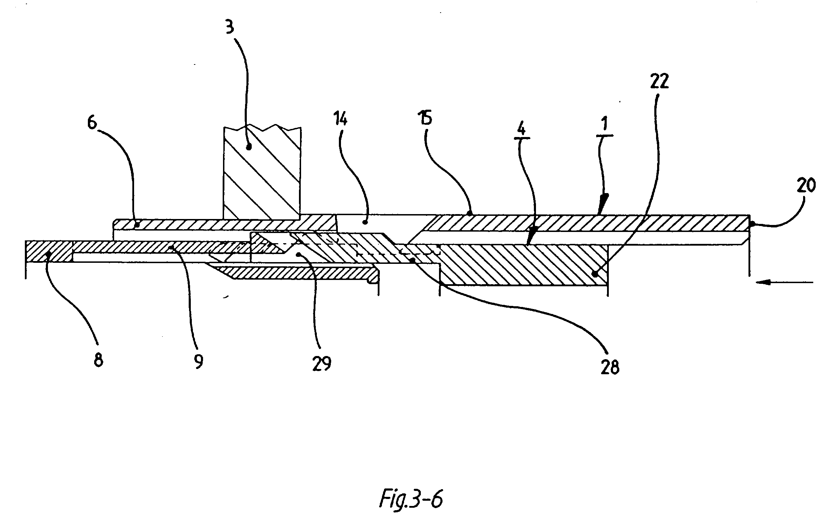

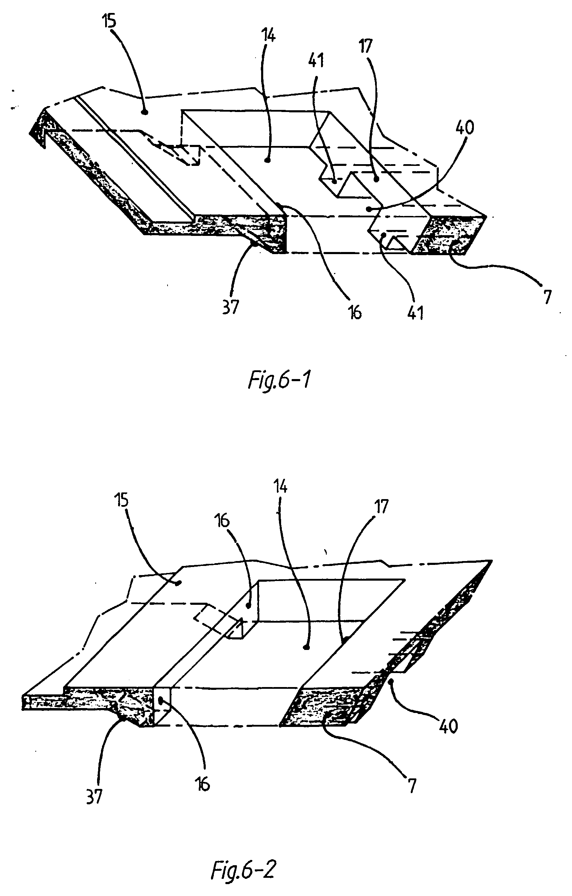

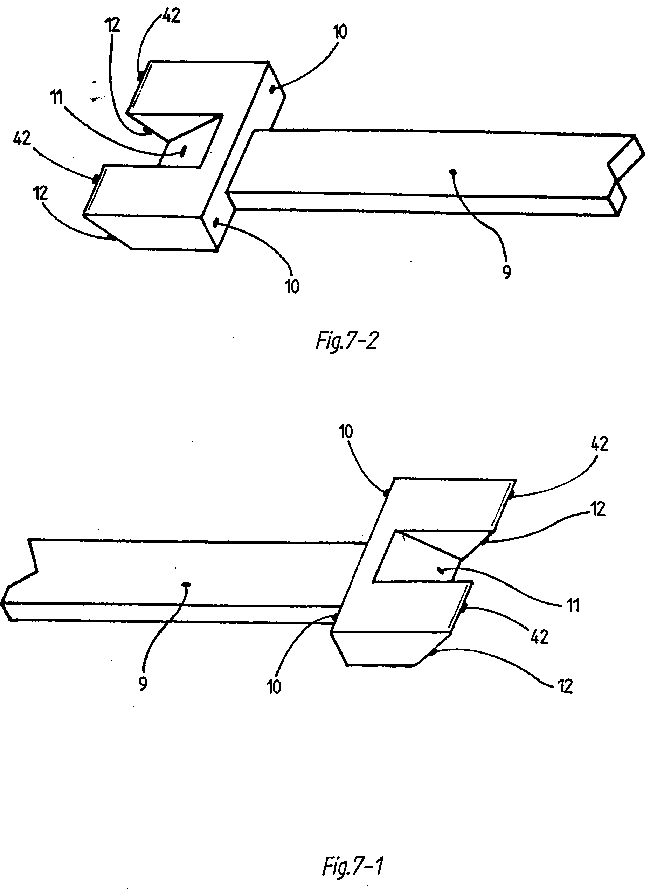

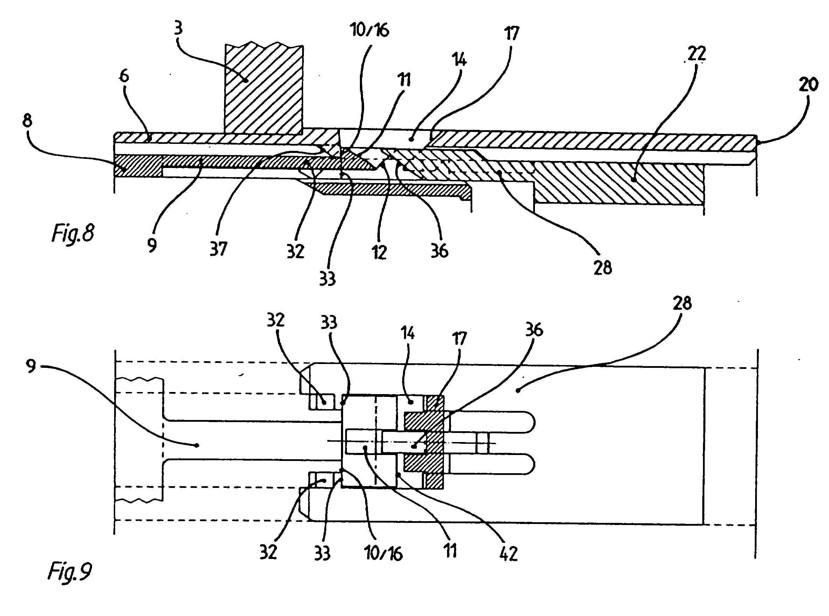

Im folgenden wird der Vorgang des Zusammenfügens der Steckverbindungshälften 1, 2 und deren Verriegelung und das Zusammenwirken der verschiedenen Anschläge und Schrägen anhand der Fig. 3-1 bis 3-6 in Verbindung mit den Fig. 5 bis 9 erläutert:
Davon ausgehend, daß das Steckteil 8 in den an der ersten Leiterplatte 3 befestigten Trägerkörper 6 eingesetzt und über den Federarm 9 mit seinen Schultern 10 in der Öffnung 14 des Trägerkörpers verrastet ist, ist das Steckende 18 des Lichtwellenleiters axial ausgerichtet.
Beim Einschieben der Leiterplatte 5 in das Gestell wird der Rastarm 28 der auf der Leiterplatte montierten zweiten Steckverbindungshälfte 4 in die erste Steckverbindungshälfte 1 eingeschoben, wobei eine optimale Führung und Ausrichtung des Halteteils über die in Seitenschlitzen des Trägerkörpers gleitenden Rastarme erfolgt. Beim Einschieben drückt zunächst die Schräge 32 am vorderen Ende des Rastarmes gegen die Schräge 12 des Federarmes (Fig. 3-1) und bei Fortführung des Einschiebens wird der Federarm nach oben bewegt, und zwar in die Öffnung 14 im Trägerkörper hinein, wobei die Öffnung selbstverständlich entsprechend bemessen ist. (Fig. 3-2) Die miteinander in Eingriff befindlichen Rastschultern 16 am Trägerkörper und 10 am Steckteil verhindern dabei, daß das Steckteil aus dem Trägerkörper herausgeschoben wird.
Beim weiteren Einschieben gelangt das vordere Ende des Federarms in den Bereich der Ausnehmung 29 / Öffnung 30 im Rastarm und wenn der Anschlag 33 sich über der Kante der Schulter 10 befindet, federt der Federarm in seine horizontale Lage zurück. Dann befindet sich das vordere Ende des Federarms in der Ausnehmung 29. (Fig. 3-3)
Bei weiterer Fortführung des Einschiebens gelangt die Schräge 36 in der Ausnehmung 29 an die Schräge 11 des Federarms, die darauf entlanggleitet und wobei der Federarm 9 nach unten gedrückt wird, bis die Verrastung der Schultern 10 und 16 gelöst ist. (Fig. 3-4). Die Nase 35 ist insgesamt höher als die übrige Oberseite des Rastarms, so daß der Beginn der Schräge 36 oberhalb der Oberseite des Rastarms liegt. Dadurch wird erreicht, daß bei einem nach vorausgegangenem Trennvorgang durch interne Reibkräfte ggf. nicht in die horizontale Lage zurückgekehrten Federarm, auf jeden Fall die Nase 35 mit ihrer Schräge 36 gegen die Schräge 11 gelangt. Die vorgespannte Feder 21 im Steckteil drückt dieses zurück, bis die Schulter 10 am Federarm am Anschlag 33 des Rastarmes anliegt. Dabei ist die Federkraft so groß, daß das vordere Ende des Steckendes 18 des Lichtwellenleiters des Steckteils der ersten Steckverbindungshälfte 1, das während des Einschiebens in die rohrförmige Öffnung 26 des Halteteils 22 der zweiten Steckverbindungshälfte 4 geschoben wurde, mit ausreichender Kraft gegen das Steckende 24 des anderen Lichtwellenleiters gedrückt wird um eine einwandfreie optische Signalübertragung sicherzustellen.
Anschließend bewegt sich der Federarm 9 wieder aufwärts, bis er seine horizontale Lage erreicht. Dabei befindet sich der Federarm in seiner 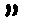 0"-Lage, d. h. er ist nicht ausgelenkt. (Fig. 3-5)

Beim Einschiebevorgang wurde die Verrastung zwischen dem Steckteil und dem Trägerkörper gelöst, und das Steckteil ist bei vollständig gesteckter Steckverbindung mit dem Halteteil 22 über dessen Rastarm 28 verbunden/verrastet. Das Steckteil ist durch die gelöste Rastung daher nicht mehr mit dem Trägerkörper verbunden, sondern nur noch in diesem geführt, und es werden keine Steckkräfte auf die erste Leiterplatte 3 übertragen.
in dieser Position ist der Federarm 9 zwischen der oberen Wand 15 des Trägerkörpers und dem Körper des Steckteils 8 gefangen, so daß eine Entriegelung von Anschlag 33 und Anschlag 10 nicht möglich ist. Daher ist die Verriegelung insgesamt äußerst sicher. (Fig. 3-6)

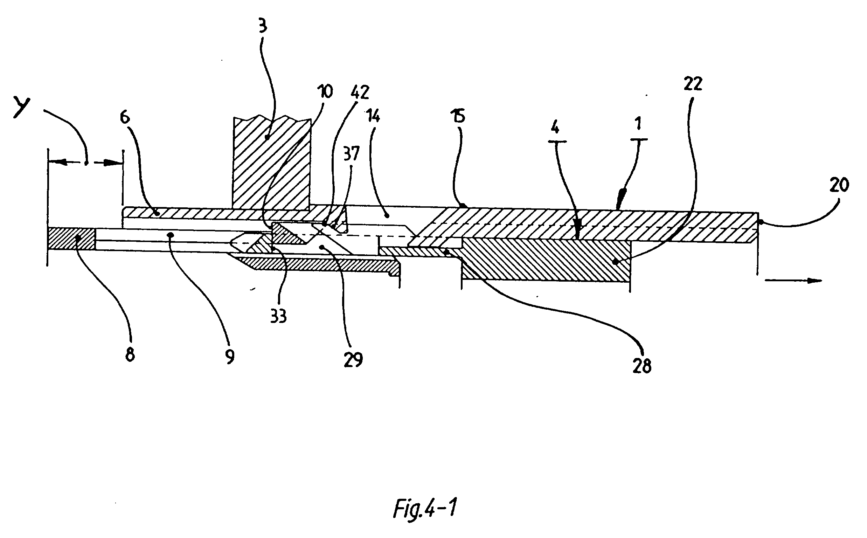

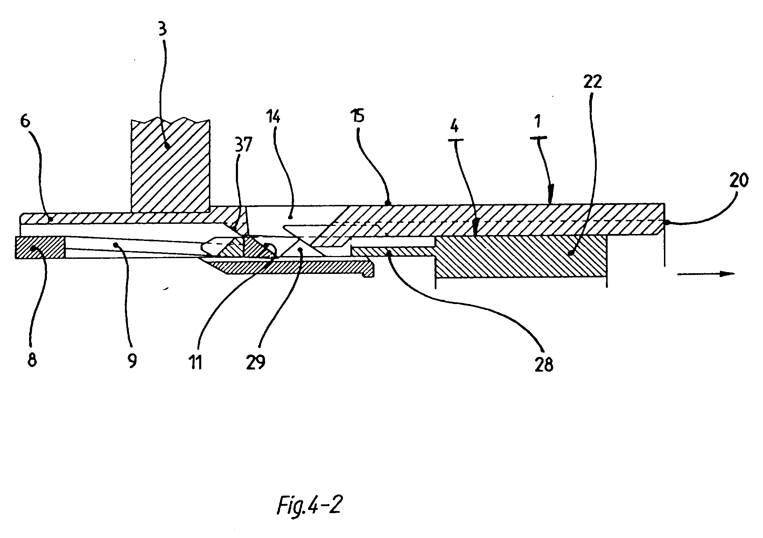

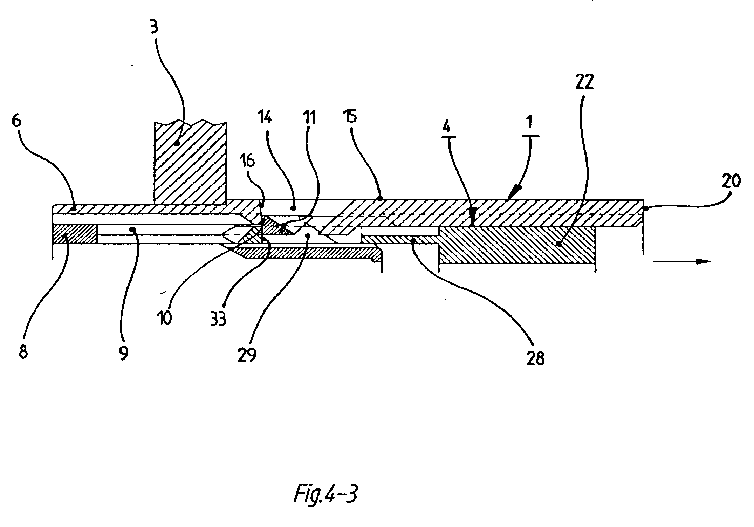

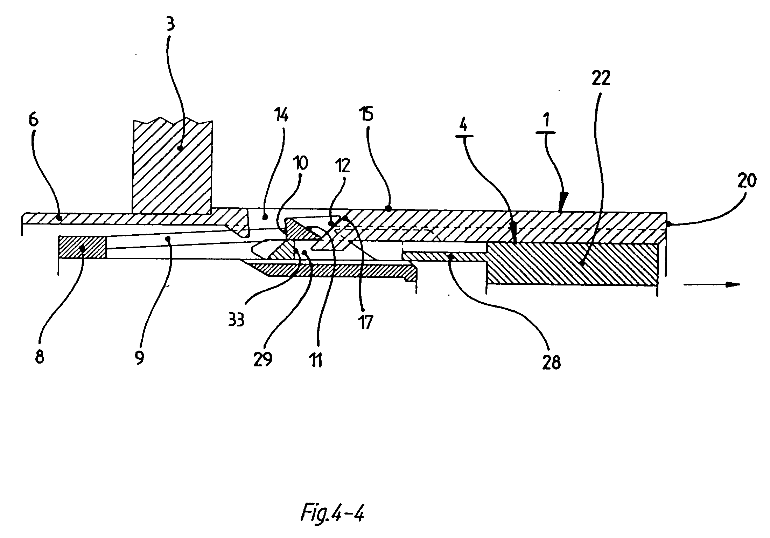

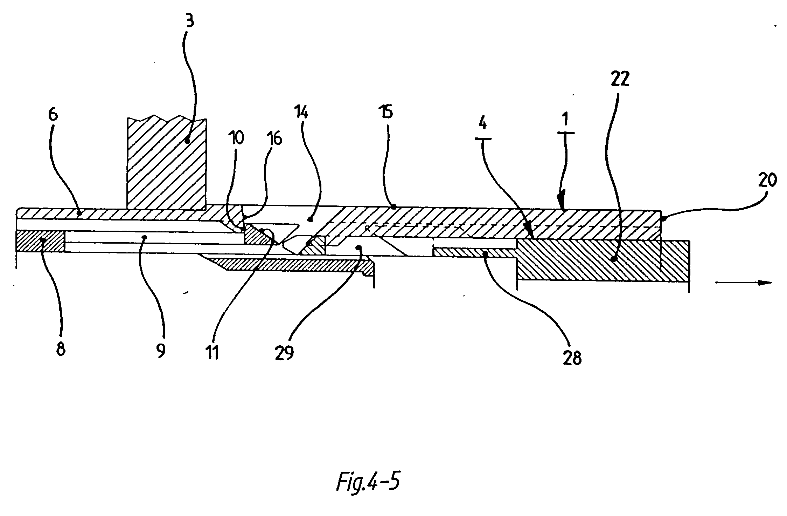

Nachfolgend wird der Vorgang des Trennens der Steckverbindung anhand der Fig. 4-1 bis 4-5 in Verbindung mit den Fig. 5 bis 9 erläutert:
Beim Ziehen der Leiterplatte 5 aus dem Gestell wird der Rastarm 28 des Halteteils 22 nach rechts bewegt, wobei der Anschlag 33 am Rastarm gegen die Schulter 10 des Federarms am Steckteil drückt (Fig. 4-1), bis schließlich die vordere, obere Kante 42 der Schräge 12 des Federarms gegen die Schräge 37 läuft und der Federarm nach unten gedrückt wird, durch die ausgeschnittene Ausnehmung 29 im Rastarm. (Fig. 4-2)
Dann gelangt die Schulter 10 des Federarms wieder gegen die Schulter 16 des Trägerkörpers, während der Anschlag 33 des Rastarms noch gegen den Anschlag 10 des Federarms gerichtet ist. Der Federarm kann dabei in seine horizontale Lage zurückkehren. (Fig. 4-3). Falls das durch Reibkräfte zwischen den Schultern 10 und 16 nicht erfolgt, wirken die unteren Enden der Schräge 17, die sich unterhalb der Oberseite des Vorsprungs 31 des Rastarms befinden, gegen das obere Ende der Schräge 12 des Federarms und drücken diesen in die horizontale Lage.
Schließlich gelangt die Schräge 12 des Federarms gegen die Schräge 17 des Trägerkörpers, und der Federarm wird wieder nach oben gedrückt (Fig. 4-4), und die Rastung der Anschläge 10 und 33 wird gelöst. Jetzt wirkt die vorgespannte Feder 21 und drückt das Steckteil zurück, bis dieses durch den Anschlag der Schulter 10 an der Schulter 16 gestoppt wird. (Fig. 4-5) Die Verbindung zwischen den beiden Steckverbindungshälften bzw. zwischen dem Steckteil und dem Halteteil ist gelöst und die Leiterplatte 5 kann aus dem Gestell gezogen werden.

Während beider Positionen, verrastete oder nicht verrastete Steckverbindung ist der Federarm des Trägerkörpers stets in seiner nicht ausgelenkten Stellung, d.h. er ist unbelastet.

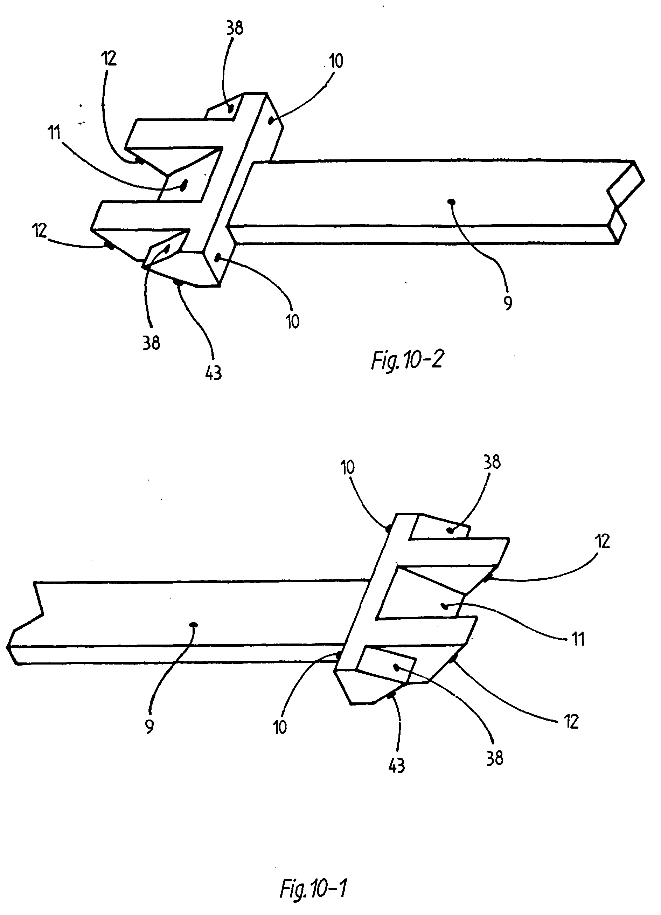

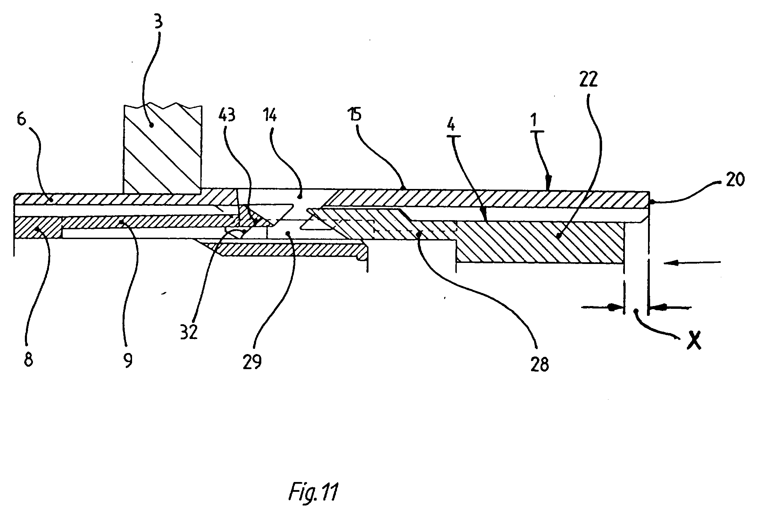

Im folgenden wird eine Modifikation des Rastsystems an Hand der Fig. 10-1, 10-2, 11 und 12 erläutert. Hierbei ist an jeder Seite des vorderen Endes des Federarms 9 eine nach oben hin weisende, kurze Schräge 38 sowie eine nach unten weisende Schräge 43 ausgebildet. Die Schrägen 38, 43 laufen aufeinander zu und enden in einer Spitze, die räumlich hinter der Schräge 12 liegt. Die beiden Schrägen 43 wirken beim Steckvorgang gegen die Schrägen 32 des Rastarms 28 des Halteteils 22.
Die Vorteile dieser modifizierten Ausführung werden deutlich bei einem Vergleich der Fig. 3-1 und 11, in denen die relativen Positionen des Halteteils 22 und des Steckteils 8 während des Zusammenfügens der Steckverbindung in gleicher Stecksequenz gezeigt sind. Dabei ist das Halteteil 22, d.h. dessen Rastarm 28, tiefer in den Trägerkörper 6 eingeschoben und die Ausführung gem. Fig. 11 weist insgesamt einen kürzeren Rast- und Verriegelungsmechanismus als Fig. 3-1 auf, wie an den unterschiedlichen Abständen X zu erkennen.

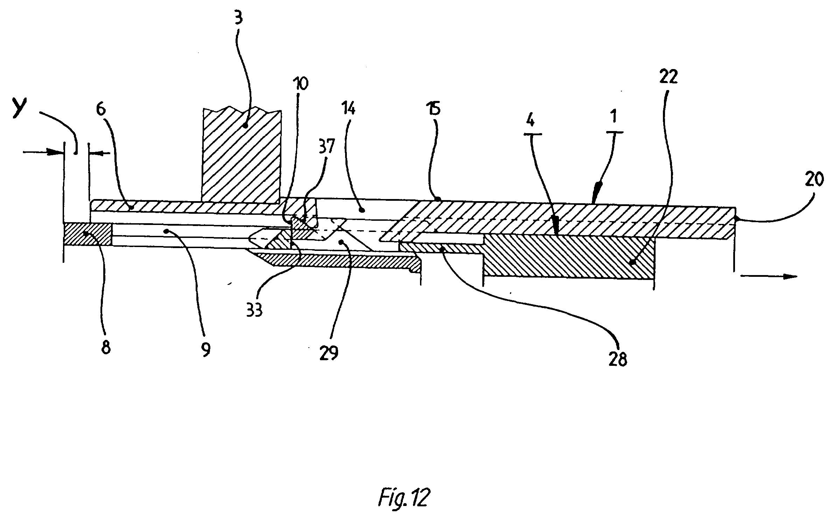

Die zwei Schrägen 38 arbeiten gegen die Schrägen 37 der oberen Wand des Trägerkörpers beim Trennen der Steckverbindung und deren Wirkungsweise wird nachfolgend erläutert:
Beim Ziehen der Leiterplatte 5 zur Vorderseite des Gestells werden die Anschläge 33 in der Ausnehmung des Rastarms gegen die Schultern 10 am Federarm bewegt, bis die Schrägen 38 des Federarms gegen die Schrägen 37 am Trägerkörper gedrückt werden. Durch diese Schrägen wird bei weiterem Zug der Federarm nach unten gedrückt. Durch diese Schrägen und deren geometrische Anordnung kann die Stecktoleranz in Steckrichtung vergrößert werden, ohne daß es nötig ist, die Gesamtlänge des Trägerkörpers zu vergrößern.
Die Vorteile dieser modifizierten Ausführung werden deutlich bei einem Vergleich der Fig. 4-1 und 12, in denen die relativen Positionen des Steckteils 8 und des Trägerkörpers 6 während des Trennens der Steckverbindung gezeigt sind. Dabei wirkt das Halteteil 22, d. h. dessen Rastarm 28 auf den Federarm 9 bei tiefer eingeschobenem Steckteil 8 in den Trägerkörper 6, so daß die Ausführung gem. Fig. 12 eine größere Stecktoleranz als Fig. 4-1 aufweist, wie an den unterschiedlichen Abständen Y zu erkennen.

Bei dieser Bewegung des Federarms tritt eine Reibung zwischen den gegeneinanderliegenden Schultern 10 und dem Anschlag 33 auf bis der Federarm ausgelenkt ist.
Dann rasten die Schultern 10 des Federarms gegen die Schultern 16 des Trägerkörpers, während die Anschläge 33 noch auf die Schultern 10 des Federarms drücken. Der Federarm kehrt in seine horizontale 0-Belastungs-Stellung zurück, während noch Reibkräfte zwischen den Schultern 10 des Federarms und dem Anschlag 33 auftreten.
Dann drücken die Schrägen 12 des Federarms auf die Schrägen 17 am Trägerkörper und der Federarm wird wieder hochgedrückt und die Verrastung zwischen der Schulter 10 und dem Anschlag 33 am Rastarm wird aufgehoben.
Die Schrägen 17 des Trägerkörpers und die Schräge 12 des Federarms werden immer wirksam, d.h. arbeiten gegeneinander, wenn der Federarm nicht vollständig in seine ursprüngliche, horizontale Lage (in seine 0-Belastungs-Position) zurückgekehrt ist, so wie die Schräge 36 des Rastarms nur dann gegen die Schräge 11 am Federarm wirkt, wenn der Federarm in angehobener Stellung verblieben ist, nachdem die Schrägen 32 des Rastarms den Federarm beim Steckvorgang aufwärts gedrückt haben. Derartiges kann ggf. durch plastische Verformung des Federarms durch Alterung, Reibkräfte, Verunreinigungen oder Grate an den wirksamen Teilen des Verriegelungssystems auftreten.

Ein wesentlicher Vorteil der zusätzlichen Schrägen 38 und 43 am Federarm liegt ferner darin, daß der Bewegungsfreiraum des Federarms in Trenn- bzw. Steckrichtung reduziert werden kann, verglichen mit der ersten Ausbildung, bei der die Schrägen 12 nur gegen die Schrägen 17 am Trägerkörper wirken. Beispielsweise wird durch die zusätzlichen Schrägen die benötigte Länge des Verbindungssystems auf der Rückseite der Rückwandleiterplatte um etwa 3 mm reduziert. Das Risiko des Verklemmens der Verrastung wird ebenso reduziert und der Federarm kehrt leichter in seine 0-Belastungslage zurück.

Die vorstehende Beschreibung erläutert die erfindungsgemäße Steckverbindung bei Verwendung als Lichtwellenleiter - Steckverbindung. Es kann jedoch unter Verwendung des gleichen Prinzips auch vorgesehen sein, daß die Steckteile der Steckverbindung als sogenannte Stirndruckkontakte ausgebildet sind, wobei dann bei zusammengefügter Steckverbindung die Stirnflächen der Kontaktteile gegeneinandergedrückt sind.

## Patentansprüche

1. Steckverbindung, vorzugsweise Steckverbindung für Lichtwellenleiter, bestehend aus zwei Steckverbindungshälften, die beim Zusammenfügen miteinander verrasten, in denen jeweils mindestens ein Steck- bzw. Kontaktteil gehalten ist, und wobei und die Stirnseiten der Steck- bzw. Kontaktteile beim Zusammenfügen der Steckverbindungshälften federnd gegeneinandergedrückt werden, dadurch gekennzeichnet,
daß die erste Steckverbindungshälfte (1) einen Trägerkörper (6) aufweist, in den ein Steckteil (8) eingeschoben und zunächst verrastet ist, wobei in dem Steckteil (8) das Steckende (18) eines Lichtwellenleiters (19) bzw. eines Stirndruckkontaktes gegen die Kraft einer Feder (21) längsbeweglich gehalten ist,
daß die zweite Steckverbindungshälfte (4) das Steckende (24) eines Lichtwellenleiters (25) bzw. eines Stirndruckkontaktes beinhaltet,
daß an der zweiten Steckverbindungshälfte (4) Rastmittel zur Verrastung mit dem Steckteil (8) der ersten Steckverbindungshälfte (1) vorgesehen sind
daß beim Zusammenfügen der Steckverbindungshälften (1, 4) die Verrastung zwischen dem Steckteil (8) und dem Trägerkörper (6) gelöst wird,
daß vor dem Lösen dieser Verrastung eine Verrastung des Steckteils (8) mit der zweiten Steckverbindungshälfte (4) erfolgt, wobei dann das Steckteil in dem Trägerkörper längsverschiebbar gehalten ist, und
daß beim Trennen der Steckverbindungshälften (1, 4) zunächst wieder eine Verrastung des Steckteils (8) mit dem Trägerkörper (6) erfolgt und anschließend die Verrastung zwischen dem Steckteil (8) und der zweiten Steckverbindungshälfte (4) gelöst wird.

2. Steckverbindung nach Anspruch 1, dadurch gekennzeichnet
daß der Trägerkörper (6) eine rechteckige Öffnung (14) aufweist,
daß das Steckteil (8) mindestens einen Federarm (9) aufweist, dessen Ende T-förmig ausgebildet und mit Anschlägen (10) und Schrägen (11,12) versehen ist,
daß das Steckteil (8) derart in den Trägerkörper (6) eingeschoben ist,
daß das Ende des Federarms in die Öffnung (14) eingreift, wobei das Steckteil durch Rastung des Anschlags (10) hinter dem durch die Öffnung gebildeten Anschlag (16) gehalten ist,
daß die zweite Steckverbindungshälfte (4) ein Halteteil (22) aufweist, in dem das Steckende (24) eines Lichtwellenleiters (25) bzw. eines Stirndruckkontaktes vorgesehen ist, wobei dieses ggf. gegen die Kraft einer Feder (27) längsbeweglich gehalten ist,
daß an dem Halteteil (22) mindestens ein sich in Steckrichtung erstreckender Rastarm (28) ausgebildet ist,
daß der Rastarm (28) an seinem vorderen Ende mit einer Schrägen (32,35) und Anschläge (33) aufweisenden Ausnehmung (29) versehen ist, und
daß das vordere Ende des Rastarms (28) und dessen Ausnehmung (29) derart ausgebildet und angeordnet ist, daß beim Ineinanderfügen der Steckverbindungshälften (1,4) das vordere Ende des Federarms des Steckteils (8) zunächst hochgebogen und aus der Öffnung (14) im Trägerkörper (6) entfernt wird und anschließend in die Ausnehmung (29) im Rastarm (28) eingreift und rastend in dieser gehalten wird, wobei die Steckenden (18,24) der Lichtwellenleiter (19,25) bzw. der Stirndruckkontakte federnd gegeneinandergedrückt sind.

3. Steckverbindung nach Anspruch 1 oder 2, dadurch gekennzeichnet,
daß die erste Steckverbindungshälfte (1) auf einer Rückwandleiterplatte (3) eines Gestells zur Aufnahme von Leiterplatten (5) vorgesehen ist.

4. Steckverbindung nach einem der vorstehenden Ansprüche, dadurch gekennzeichnet,
daß das Halteteil (22) der zweiten Steckverbindungshälfte (4) an einer in das Gestell einschiebbaren Leiterplatte (5) vorgesehen ist.

5. Steckverbindung nach einem der vorstehenden Ansprüche, dadurch gekennzeichnet,
daß das vordere Ende des Federarms (9) mit zwei zusätzlichen Schrägen (38) versehen ist, die mit Schrägen (37) an der Wand (15) des Trägerkörpers (6) zusammen wirken.

6. Steckverbindung nach einem der vorstehenden Ansprüche, dadurch gekennzeichnet
daß an jeder Seite des vorderen Endes des Federarms (9) eine nach oben hinweisende Schräge (38) und eine nach unten hinweisende Schräge (43) ausgebildet ist, die aufeinander zu laufen und in einer Spitze enden, die räumlich hinter der Schräge (12) liegt.
